# DEMANDE DE BREVET EUROPEEN

(11) **EP 1 180 908 A1**
(43) Date de publication de la demande: **20.02.2002**
(21) Numéro de dépôt: 01402095.2
(22) Date de dépôt: 02.08.2001
(51) Int. Cl.: H04Q 7/38, G06F 9/46

(54) **Procédé de contrôle de la charge de trafic dans un reseau de radiocommunications mobiles**

(30) Priorité: 10.08.2000 FR 0010538
(71) Demandeur: ALCATEL, 75008 Paris (FR)
(72) Inventeur: Agin, Pascal, 94370 Sucy en Brie (FR); Blanc, Patrick, 92130 Issy Les Moulineaux (FR); Visbecq, Olivier, 78150 Le Chesnay (FR)
(74) Mandataire: El Manouni, Josiane

(57) **Abrégé**

Procédé de gestion de la charge de traitement d'une station de base (Node B), comprenant une station de base (Node B) et un contrôleur (CRNC), en particulier dans un système de type UMTS, dans lequel on décide d'accepter un nouvel appel dans une cellule non pas en fonction de sa capacité globale de traitement, mais en fonction d'une description détaillée des ressources disponibles. À cette fin, on transmet de la station de base (Node B) vers le contrôleur (CRNC) un message (M) qui l'informe de la capacité de traitement disponible pour effectuer différentes opérations, en particulier le nombre de liens pouvant encore être établis (N_{MAX}), ainsi que le débit net maximum pouvant être par le décodeur convolutionel (D1_{MAX}) ou le turbo-décodeur (D2_{MAX}) dont elle est equipée. Le contrôleur vérifie au moment de l'admission de l'appel que celui-ci n'épuisera aucune de ces ressources.

## Description

La présente invention concerne d'une manière générale les systèmes de radiocommunications mobiles, et plus particulièrement les systèmes utilisant la technique CDMA (pour "Code Division Multiple Access" en anglais).

La technique CDMA est notamment utilisée dans les systèmes dits de troisième génération, tels que notamment le système UMTS (pour "Universal Mobile Telecommunication System" en anglais).

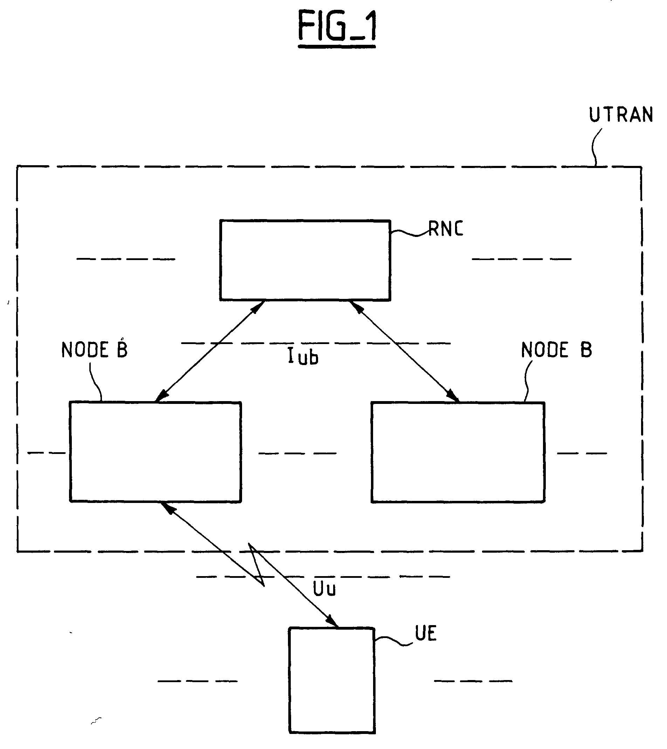

D'une manière générale, un réseau de radiocommunications mobiles comporte, comme rappelé sur la figure 1, un ensemble de stations de base (appelées aussi "Node B" dans l'UMTS), et de contrôleurs de stations de base (appelés aussi RNC pour "Radio Network Controller" dans l'UMTS). Dans l'UMTS, ce réseau est aussi appelé UTRAN, pour "UMTS Terrestrial Radio Access Network". Un Node B est en relation d'une part avec des stations mobiles (appelées aussi UE, pour "User Equipment" dans l'UMTS) situées dans sa zone de couverture ou cellule, et d'autre part avec le RNC qui le contrôle (ou CRNC, pour "Controlling Radio Network Controller" en anglais). L'interface entre UE et Node B, ou interface'radio, est aussi appelée interface Uu dans l'UMTS. L'interface entre Node B et RNC est aussi appelée interface lub dans l'UMTS. Ce réseau est par ailleurs en relation, par des moyens habituels non illustrés spécifiquement, avec les réseaux extérieurs habituels.

Dans les systèmes CDMA les limitations de capacité sur l'interface radio sont fondamentalement différentes de ce qu'elles sont dans les systèmes utilisant d'autres techniques d'accès multiple, telles que notamment la technique TDMA (pour "Time Division Multiple Access" en anglais). La technique.TDMA est notamment utilisée dans les systèmes dits de deuxième génération tels que le système GSM (pour "Global System for Mobile communications" en anglais). Dans les systèmes CDMA, tous les utilisateurs partagent la même ressource de fréquence à tout instant. La capacité de ces systèmes est donc limitée par les interférences, ces systèmes étant aussi appelés pour cette raison "soft limited systems" (en anglais).

C'est pourquoi, dans les systèmes CDMA, on prévoit des algorithmes tels que des algorithmes dits de contrôle de charge (ou "load control " en anglais), pour prévenir les surcharges, les détecter et le cas échéant les corriger, afin d'éviter une dégradation de qualité, et des algorithmes dits de contrôle d'admission d'appel (ou "call admission control" en anglais), pour décider si la capacité d'une cellule non utilisée à un instant donné est suffisante pour accepter un nouvel appel dans cette cellule (en fonction de divers paramètres tels que le service requis pour cet appel, ...etc). Dans ce qui suit ces divers algorithmes seront aussi regroupés sous le terme général de contrôle de charge.

Ces algorithmes utilisent habituellement seulement des critères radio, et sont habituellement mis en oeuvre dans le CRNC, qui ne dispose pas d'informations sur la capacité de traitement du Node B. Dans ces conditions, il peut par exemple se produire qu'un nouvel appel soit accepté par le CRNC, puis finalement rejeté par manque de ressources de traitement dans le Node B, ce qui entraîne inutilement des traitements supplémentaires dans le CRNC et des échanges de signalisation supplémentaires entre CRNC et Node B.

Bien sûr il serait possible d'éviter ces inconvénients en prévoyant dans les stations de base des ressources de traitement suffisantes pour couvrir tous les cas, y compris les cas de capacité maximale (correspondant au cas de très faible niveau d'interférence). Mais ceci conduirait à avoir des stations de base coûteuses, et surdimensionnées la plupart du temps. En outre, dans le cas d'introduction progressive des services offerts par ces systèmes, la capacité de traitement des stations de base peut être limitée au début de la mise en service de ces systèmes, puis progressivement augmentée ensuite.

Il serait donc souhaitable de tenir compte de la capacité de traitement du trafic par les stations de base (ou Node B) pour le contrôle de la charge de trafic dans un tel système.

Pour le système UMTS, il est proposé dans le document 3G TS 25.433 V3.0.0 (2000-01) publié par le 3GPP ("3^{rd} Generation Partnership Project"), tel que modifié suivant la contribution 3GPP R3-0000520, que le Node B signale au CRNC sa capacité de traitement globale (appelée "capacity credit"), et la quantité de cette capacité de traitement qui est consommée par l'allocation d'un canal physique, ou code d'étalement, pour chaque valeur du facteur d'étalement.

Ainsi que l'a observé le demandeur, et comme il sera expliqué de manière plus détaillée par la suite, cette solution n'est pas adaptée pour tenir compte des limitations dans la capacité de traitement d'un Node B. La présente invention a notamment pour but d'éviter ces inconvénients.

La présente invention a ainsi pour objet un procédé pour tenir compte de la capacité de traitement du trafic, pour le contrôle de la charge de trafic dans un réseau de radiocommunications mobiles, ce procédé étant essentiellement caractérisé en ce qu'on tient compte d'une ou de plusieurs limitations dans ladite capacité de traitement, correspondant à un ou plusieurs paramètres représentatifs de ladite charge de trafic.

Suivant une autre caractéristique, un desdits paramètres est lié au nombre de liens radio pouvant être établis, et une limitation correspondante est représentée par un nombre maximum de liens radio pouvant être établis.

Suivant une autre caractéristique, ledit nombre maximum de liens radio est un nombre maximum de liens radio pouvant être établis en macro-diversité.

Suivant une autre caractéristique, ledit nombre maximum de liens radio est un nombre maximum de liens radio pouvant être établis en diversité de transmission.

Suivant une autre caractéristique, ledit nombre maximum de liens radio est représenté par un nombre maximum de ressources radio pouvant être allouées.

Suivant une autre caractéristique, un desdits paramètres est lié au débit pour les liens radio établis, et une limitation correspondante est représentée par un débit maximum pour les liens radio établis.

Suivant une autre caractéristique, ledit débit maximum est un débit maximum pour le sens montant.

Suivant une autre caractéristique, ledit débit maximum est un débit maximum pour le sens descendant.

Suivant une autre caractéristique, ledit débit maximum est un débit maximum pour un premier type de trafic, pour lequel un premier type de code correcteur d'erreurs est utilisé.

Suivant une autre caractéristique, ledit débit maximum est un débit maximum pour un deuxième type de de trafic, pour lequel un deuxième type de code correcteur d'erreurs est utilisé.

Suivant une autre caractéristique, un premier type de code correcteur d'erreurs est un turbo-code.

Suivant une autre caractéristique, un deuxième type de code correcteur d'erreurs est un code convolutionnel.

Suivant une autre caractéristique, ledit débit est un débit net.

Suivant une autre caractéristique, lesdites limitations sont considérées par cellule ou par station de base.

Suivant une autre caractéristique, lesdites limitations sont considérées par canal physique.

Suivant une autre caractéristique, lesdites limitations sont considérées par type de canal physique.

Suivant une autre caractéristique, un type de canal physique est un canal physique dédié.

Suivant une autre caractéristique, un type de canal physique est un canal physique commun.

Un autre objet de la présente invention est un réseau de radiocommunications mobiles, ce réseau étant essentiellement caractérisé en ce qu'il comporte des moyens pour mettre en oeuvre un tel procédé.

Un autre objet de la présente invention est une station de base pour réseau de radiocommunications mobiles, cette station de base étant essentiellement caractérisée en ce qu'elle comporte des moyens pour mettre en oeuvre un tel procédé.

Suivant une autre caractéristique, lesdits moyens dans ladite station de base comportent des moyens pour signaler à un contrôleur de stations de base qui la contrôle une ou plusieurs limitations dans sa capacité de traitement, correspondant à un ou plusieurs paramètres représentatifs de la charge de trafic .

Un autre objet de la présente invention est un contrôleur de stations de base pour réseau de radiocommunications mobiles, ce contrôleur de stations de base étant essentiellement caractérisé en ce qu'il comporte des moyens pour mettre en oeuvre un tel procédé.

Suivant une autre caractéristique, lesdits moyens dans ledit contrôleur de stations de base comportent des moyens pour vérifier si une ou plusieurs des limitations dans la capacité de traitement d'une station de base qu'il contrôle, correspondant à un ou plusieurs paramètres représentatifs de la charge de trafic, sont atteintes.

D'autres objets et caractéristiques de la présente invention apparaîtront à la lecture de la description suivante d'exemples de réalisation, faite en relation avec les dessins ci-annexés dans lesquels:
- la figure 1 rappelle l'architecture générale d'un système de radiocommunications mobiles, tel que notamment le système UMTS,
- les figures 2 et 3 rappellent les principaux traitements utilisés, respectivement en émission et en réception, dans une station de base, telle qu'un Node B pour le système UMTS,
- la figure 4 est un schéma destiné à illustrer un exemple de procédé suivant la présente invention.

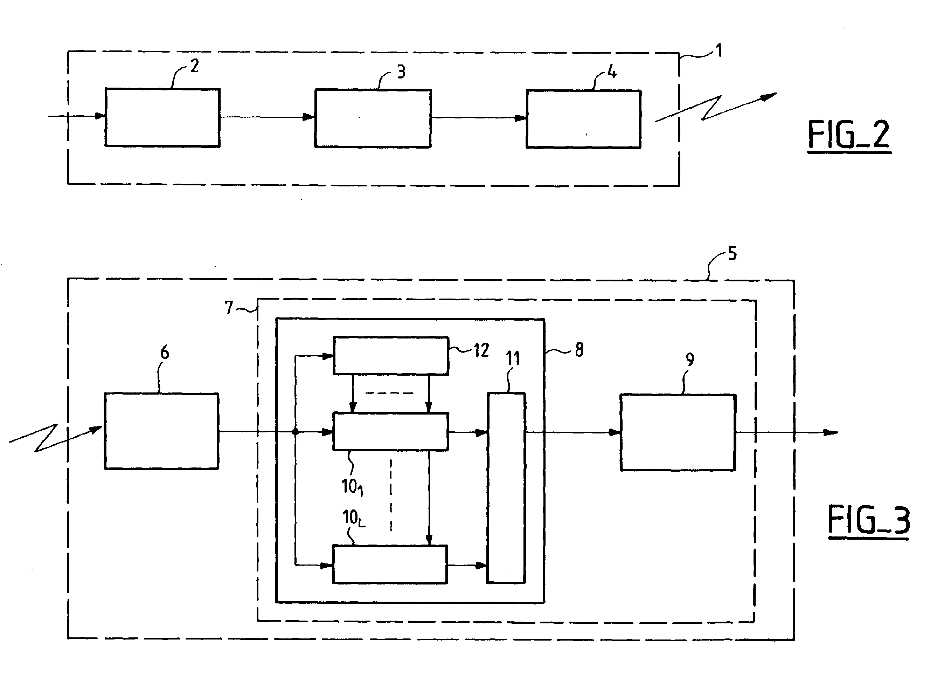

Les figures 2 et 3 rappellent les principaux traitements utilisés, respectivement en émission et en réception, dans une station de base telle que notamment un Node B pour le système UMTS.

Sur la figure 2 est illustré un émetteur 1 comportant:
- des moyens de codage-canal 2,
- des moyens d'étalement 3,
- des moyens d'émission radio-fréquence 4.

Ces différents traitements sont bien connus de l'homme du métier, et ne nécessitent pas d'être re-décrits ici de manière détaillée.

De manière connue, le codage-canal utilise des techniques telles que le codage correcteur d'erreurs et l'entrelacement, permettant d'obtenir une protection contre les erreurs de transmission.

Le codage (tel que le codage correcteur d'erreurs) est destiné à introduire une redondance dans les informations transmises. Le taux de codage est défini comme le rapport du nombre de bits d'information à transmettre sur le nombre de bits transmis ou bits codés. Différents niveaux de qualité de service peuvent être obtenus en utilisant différents types de codes correcteurs d'erreurs. Par exemple, dans l'UMTS, pour un premier type de trafic (tel que des données à haut débit) on utilise un premier type de code correcteur d'erreurs constitué par un turbo-code, et pour un deuxième type de trafic (tel que des données à plus faible débit ou de la voix) on utilise un deuxième type de code correcteur d'erreurs, constitué par un code convolutionnel.

Le codage-canal inclut aussi généralement une adaptation de débit destinée à adapter le débit à transmettre au débit offert pour sa transmission. L'adaptation de débit peut inclure des techniques telles que répétition et/ou poinçonnage, le taux d'adaptation de débit étant alors défini comme le taux de répétition et/ou de poinçonnage.

Le débit brut est défini comme le débit effectivement transmis sur l'interface radio. Le débit net est le débit obtenu après déduction, du débit brut, de tout ce qui n'est pas utile pour l'utilisateur, comme notamment la redondance introduite par le codage.

L'étalement utilise les principes connus de l'étalement de spectre. La longueur du code d'étalement utilisé est aussi appelée facteur d'étalement. Dans les systèmes tels que notamment le système UMTS, le facteur d'étalement peut varier en fonction du débit à transmettre.

Sur la figure 3 est illustré un récepteur 5 comportant:
- des moyens de réception radio-fréquence 6,
- des moyens 7 d'estimation des données reçues, comportant eux-mêmes notamment des moyens de désétalement 8 et des moyens de décodage-canal 9.

Ces différents traitements sont également bien connus de l'homme du métier, et ne nécessitent donc pas non plus d'être re-décrits ici de manière détaillée.

La figure 3 illustre un exemple de traitement pouvant être mis en oeuvre dans les moyens de désétalement 8. Ce traitement correspond en l'occurrence à celui mis en oeuvre dans un récepteur de type Rake, permettant d'améliorer la qualité de l'estimation des données reçues, en exploitant les phénomènes de multi-trajets, c'est-à-dire de propagation d'un même signal source selon des trajets multiples, obtenus notamment par réflexions multiples sur des éléments de l'environnement. Dans les systèmes CDMA, contrairement notamment aux systèmes TDMA, ces trajets multiples peuvent en effet être exploités pour améliorer la qualité de l'estimation des données reçues.

Un récepteur Rake comporte un ensemble de L doigts (ou "fingers" en anglais) notés 10₁ à 10_{L}, et des moyens 11 de combinaison des signaux issus de ces différents doigts. Chaque doigt permet de désétaler le signal reçu selon l'un des différents trajets pris en compte, les différents trajets pris en compte étant déterminés par des moyens 12 pour estimer la réponse impulsionnelle du canal de transmission. Les moyens 11 permettent de combiner les signaux désétalés correspondant aux différents trajets considérés, selon un traitement destiné à optimiser la qualité de l'estimation des données reçues.

La technique de réception au moyen d'un récepteur Rake est également utilisée en liaison avec la technique de transmission en macro-diversité, selon laquelle un même signal source est transmis simultanément à une même station mobile par plusieurs stations de base. La technique de transmission en macro-diversité permet non seulement d'améliorer les performances en réception, au moyen d'un récepteur Rake, mais aussi de minimiser les risques de perte d'appel lors de transferts inter-cellulaires, ou "handovers" en anglais. Pour cette raison elle est aussi appelée "soft handover" (en anglais), par opposition à la technique de "hard handover" selon laquelle une station mobile n'est connectée à chaque instant qu'à une seule station de base.

Les moyens d'estimation des données reçues peuvent en outre utiliser diverses techniques destinées à réduire les interférences telles que par exemple la technique dite de détection multi-utilisateur (ou "multi-user detection" en anglais).

Il est aussi possible d'utiliser une pluralité d'antennes de réception. Les moyens d'estimation des données reçues comportent alors en outre des moyens de combinaison des signaux obtenus pour ces différentes antennes de réception, également de manière à optimiser la qualité de l'estimation des données reçues.

Le décodage-canal inclut des fonctions telles qu'un désentrelacement et un décodage correcteur d'erreurs. Le décodage correcteur d'erreurs est généralement nettement plus complexe que le codage correcteur d'erreurs et peut utiliser des techniques telles que par exemple le décodage par maximum de vraisemblance. Par exemple, pour les codes convolutionnels, on peut utiliser un algorithme dit de Viterbi.

Pour pouvoir traiter simultanément plusieurs utilisateurs, une station de base ou Node B comporte un ensemble d'émetteurs et de récepteurs tels que l'émetteur et le récepteur ainsi rappelés. Une grande capacité de traitement est ainsi requise dans une station de base ou Node B, notamment, en réception, pour l'estimation des données reçues.

Notamment une grande capacité de traitement est requise pour le traitement par le récepteur Rake. Au moins un doigt de récepteur Rake est nécessaire par utilisateur actif, mais le nombre de doigts peut dépendre de nombreux paramètres tels que le nombre d'antennes de réception, le nombre de secteurs de la station de base, ...etc. Le nombre total de doigts du récepteur Rake implique généralement une limitation dans le nombre maximum de liens radio qui peuvent être établis dans la station de base, ou encore dans le nombre d'utilisateurs actifs dans la cellule considérée, qui peuvent être traités simultanément dans la station de base.

Une grande capacité de traitement est également requise dans la station de base pour le décodage-canal, principalement pour le décodage correcteur d'erreurs. D'une manière générale, la quantité de ressources de traitement nécessaire pour le décodage correcteur d'erreurs est liée au débit, et augmente avec ce débit.

Comme indiqué dans l'introduction, la capacité de traitement d'un Node B peut donc être limitée, et il serait alors souhaitable que le CRNC puisse en tenir compte dans des algorithmes tels que des algorithmes de contrôle de charge ou d'admission d'appels.

La solution antérieure rappelée précédemment ne permet pas de répondre à ce besoin de manière optimale, notamment pour les raisons suivantes:
- Les traitements effectués dans le décodage-canal dépendent du débit net plutôt que du débit brut, ou encore du facteur d'étalement. Par exemple, en considérant un facteur d'étalement de 128 (et donc un débit brut de 30 kbps, le débit net peut avoir différentes valeurs suivant le taux de codage et le taux d'adaptation de débit, typiquement le débit net peut varier de 5 à 15 kbps. Par conséquent, pour un facteur d'étalement fixe, la quantité de traitement dans le Node B peut varier de manière significative (par exemple dans un rapport supérieur à 3). Or ceci n'est pas pris en compte dans cette solution antérieure.
- Le nombre de doigts de récepteur Rake requis pour l'estimation du canal de transmission et des données est fortement dépendant du nombre de liens radio. Or dans la solution antérieure le nombre maximum de doigts de récepteur Rake dans le Node B ne peut pas être pris en compte dans des algorithmes tels que des algorithmes de contrôle de charge ou d'admission d'appels car ce type de limitation n'est pas lié au facteur d'étalement.
- La capacité de traitement signalée par le Node B au CRNC est une capacité de traitement globale qui ne peut pas tenir compte des différentes limitations possibles dans la capacité de traitement de ce Node B.

Suivant la présente invention, on tient compte d'une ou de plusieurs limitations dans ladite capacité de traitement, correspondant à un ou plusieurs paramètres représentatifs de la charge de trafic.

Un premier paramètre représentatif de la charge de trafic est le nombre de liens radio pouvant être établis, et une limitation correspondante dans la capacité de traitement d'un Node B peut être représentée par un nombre maximum de liens radio pouvant être établis.

Une possibilité serait de prendre en compte le nombre maximum de liens radio pouvant être établis en macro-diversité.

En effet, en contrepartie de l'amélioration des performances en réception qu'elle procure, la technique de transmission en macro-diversité a pour inconvénient d'entraîner plus rapidement un risque de surcharge de traitement, du fait que des ressources de traitement sont utilisées pour améliorer la qualité de communications en cours, plutôt que, par exemple, pour admettre de nouveaux appels. C'est pourquoi le nombre maximum de liens radio pouvant être établis en macro-diversité dans la cellule considérée peut être utilisé, de préférence au nombre maximum de liens radio (établis ou non en macro-diversité), pour représenter ce type de limitation dans la capacité de traitement d'un Node B.

Pour des raisons similaires, une autre possibilité serait de prendre en compte le nombre maximum de liens radio pouvant être établis en diversité d'émission.

Une autre possibilité pour tenir compte du nombre maximum de liens radio pouvant être établis serait de prendre en compte le nombre maximum de ressources radio, ou codes d'étalement, pouvant être alloués dans la cellule considérée.

Un autre paramètre représentatif de la charge de trafic est le débit pour les liens radio établis, et une limitation correspondante dans la capacité de traitement d'un Node B peut être représentée par un débit maximum pour les liens radio établis.

De préférence, le débit considéré est un débit net.

En outre, pour couvrir toutes les possibilités pour définir le débit dans ces systèmes, le débit peut être un débit-bit, un débit-symbole, ou un débit-chip.

La distinction entre débit-bit et débit-symbole est habituellement faite dans les systèmes utilisant plusieurs modulations possibles. La modulation est le traitement permettant d'obtenir, à partir d'informations à transmettre, un signal analogique porteur de ces informations. Différentes techniques de modulation sont connues, caractérisées par leur efficacité spectrale, c'est-à-dire leur capacité à transmettre un nombre plus ou moins élevé de bits par symbole, le débit de bits transmis augmentant avec l'efficacité de la modulation, pour une même bande de fréquence allouée.

Le terme débit-chip est utilisé pour désigner le débit après étalement (le terme "chip" désignant classiquement la période de transmission élémentaire du signal obtenu après étalement).

Pour tenir compte des limitations dans la capacité de traitement d'un Node B en réception, le débit maximum considéré pourrait être un débit maximum pour le sens montant.

Le traitement en émission requiert généralement une capacité de traitement inférieure à celle requise pour le traitement en réception. Cependant, des contraintes sur le débit maximum en émission pourraient aussi s'appliquer, notamment dues au traitement par codage correcteur d'erreurs.

Pour tenir compte aussi des limitations dans la capacité de traitement d'un Node B en émission, on pourrait distinguer:
- un débit maximum pour le sens montant,
- un débit maximum pour le sens descendant.

En outre, la quantité de ressources de traitement nécessaire dépend du type de code correcteur d'erreurs utilisé, par exemple, dans le cas de l'UMTS, un turbo-code ou un code convolutionnel. La plus grande capacité de traitement est requise pour le cas de turbo-code.

Les contraintes sur le débit maximum pourraient alors distinguer:
- un débit maximum pour un premier type de trafic utilisant un premier type de code correcteur d'erreurs, tel que notamment un turbo-code,
- un débit maximum pour un deuxième type de trafic utilisant un deuxième type de code correcteur d'erreurs, tel que notamment un code convolutionnel.

Des contraintes pourraient aussi être dues au volume de mémoire disponible dans la station de base. Le volume de mémoire requis dépend du débit et de la longueur des séquences sur lesquelles est opéré le codage correcteur d'erreurs et l'entrelacement. Dans le système UMTS, cette longueur est aussi appelée intervalle de temps de transmission ou TTI (pour 'Transmission Time Interval" en anglais).

Ainsi une autre limitation dans la capacité de traitement d'un Node B peut être représentée par le volume de mémoire disponible dans le Node B. Ce type de limitation peut aussi être représenté par des paramètres représentatifs de la charge de trafic, tels que notamment le débit.

Les différentes limitations prises en compte peuvent être considérées par, cellule ou par Node B, un Node B pouvant gérer plusieurs cellules. Dans le cas de Node B gérant plusieurs cellules, il est possible de considérer, pour chaque limitation prise en compte, une valeur par cellule et une valeur pour le Node B.

Les différentes limitations prises en compte peuvent être signalées par le Node B au CRNC. Dans ce cas, pour limiter la quantité de ressources de transmission nécessaires à cette signalisation, on pourra par exemple se limiter à la signalisation de certaines informations, telles que par exemple:
- le nombre maximum de liens radio pouvant être établis dans la cellule ou dans le Node B,
- le débit net maximum dans le sens montant (enkbps) que le décodeur convolutionnel du Node B est capable de traiter, en considérant fous les liens radio établis dans la cellule ou dans le Node B,
- ledébit net maximum dans le sens montant (enkbps) que le turbo-décodeur du Node B est capable de traiter, en considérant tous les liens radio établis dans la cellule ou dans le Node B.

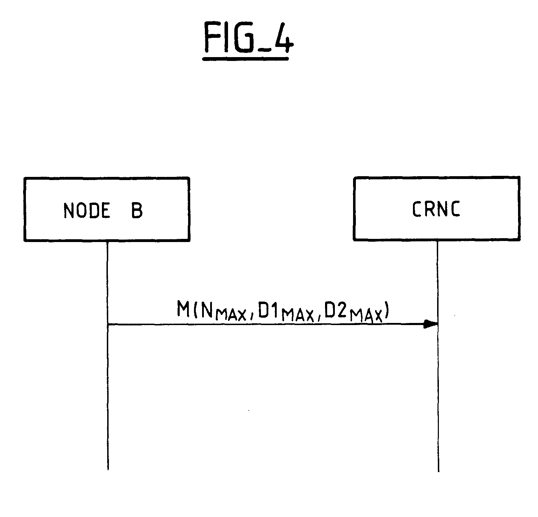

Ceci est illustré sur la figure 4 où on a noté M un message de signalisation transmis du Node B au CRNC, ce message de signalisation incluant les informations N_{MAX} (nombre maximum de liens radio), D1_{MAX} (débit maximum pour le décodeur convolutionnel), D2_{MAX} (débit maximum pour le turbo-décodeur).

Dans le cas de Node B gérant plusieurs cellules, trois par exemple, le message de signalisation envoyé du Node B au CRNC peut contenir, pour chaque critère, par exemple D1_{MAX}, quatre valeurs différentes: une valeur de D1_{MAX} par cellule et une valeur de D1_{MAX} pour le Node B. Mais on pourrait aussi transmettre uniquement une valeur de D1_{MAX} par Node B et ne pas distinguer les différentes cellules.

En outre, pour chacune de ces limitations, on pourrait signaler une valeur pour chaque canal physique. Dans l'UMTS par exemple, les différents canaux physiques incluent notamment les canaux suivants:
- DPDCH/DPCCH (pour "Dedicated Physical Data Channel/Dedicated Physical Control Channel" en anglais)
- PRACH (pour "Physical Random Access Channel" en anglais)
- PDSCH (pour "Physical Downlink Shared Channel" en anglais)
- ...etc.

Au lieu de signaler une valeur pour chaque canal physique, on pourrait aussi signaler une valeur pour chaque type de canal physique. Par exemple un type de canal physique pourrait être constitué par un canal dédié (ou alloué à un utilisateur particulier), tel que par exemple les canaux DPDCH/DPCCH dans l'UMTS, et un autre type de canal pourrait être constitué par un canal commun (ou partagé par plusieurs utilisateurs), tel que par exemple le canal PRACH dans l'UMTS.

Ces limitations permettent ainsi notamment de prendre en compte séparément les contraintes sur le débit, dues au décodage-canal, et les contraintes sur le nombre de liens radio , dues au traitement au moyen d'un récepteur Rake.

Elles peuvent être signalées par le Node B au CRNC à chaque fois qu'elles sont modifiées, comme expliqué dans l'introduction. Elles peuvent être transmises dans un message de signalisation spécifique, tel que le message appelé "Resource Status Indication" défini dans le document 3G TS 25.433 V3.0.0 (2000-01) pour l'UMTS.

De façon alternative, au lieu d'étre signalées par le Node B au CRNC, ces informations pourraient être communiquées au CRNC par un autre moyen, tels que notamment par des moyens de gestion et de maintenance de ce système (ou "O&M", pour "Operation & Maintenance" en anglais).

Le CRNC tient compte des différentes limitations qui lui sont ainsi signalées ou communiquées, en vérifiant, pour chacun des paramètres ainsi pris en compte, si la limitation est ou non atteinte. Par exemple, s'il reçoit les informations N_{MAX}, D1_{MAX} , D2_{MAX} définies précédemment, il vérifie si :
- le nombre de liens radio établis dans la cellule ou dans le Node B est inférieur à N_{MAX},
- le débit net maximum dans le sens montant (en kbps) que le décodeur convolutionnel du Node B doit traiter, en considérant tous les liens radio établis dans la cellule ou dans le Node B, est inférieur à D1_{MAX}
- le débit net maximum dans le sens montant (en kbps) que le turbo-décodeur du Node B doit traiter, en considérant tous les liens radio établis dans la cellule ou dans le Node B, est inférieur à D2_{MAX.}

Si l'une au moins de ces conditions n'est pas remplie, il peut par exemple décider de ne pas admettre de nouvel appel dans la cellule ou dans le Node B considéré.

Dans le cas de Node B gérant plusieurs cellules (trois par exemple), et par exemple dans le cas considéré précédemment où le message de signalisation envoyé du Node B au CRNC contient pour chaque critère quatre valeurs différentes, une par cellule et une pour le Node B, le CRNC vérifie quatre contraintes, une pour tous les liens de chaque cellule et une pour tous les liens de toutes les cellules du Node B.

## Revendications

1. Procédé pour tenir compte de la capacité de traitement du trafic, pour le contrôle de la charge de trafic dans un réseau de radiocommunications mobiles, ce procédé étant essentiellement **caractérisé en ce qu'**on tient compte d'une ou de plusieurs limitations dans ladite capacité de traitement, correspondant à un ou plusieurs paramètres représentatifs de ladite charge de trafic.

2. Procédé selon la revendication 1, **caractérisé en ce qu'**un desdits paramètres est lié au nombre de liens radio pouvant être établis, et une limitation correspondante est représentée par un nombre maximum de liens radio pouvant être établis.

3. Procédé selon la revendication 2, **caractérisé en ce que** ledit nombre maximum de liens radio est un nombre maximum de liens radio pouvant être établis en macro-diversité.

4. Procédé selon la revendication 2, **caractérisé en ce que** ledit nombre maximum de liens radio est un nombre maximum de liens radio pouvant être établis en diversité de transmission.

5. Procédé selon la revendication 2, **caractérisé en ce que** ledit nombre maximum de liens radio est représenté par un nombre maximum de ressources radio pouvant être allouées.

6. Procédé selon la revendication 1, **caractérisé en ce que** un desdits paramètres est lié au débit pour les liens radio établis, et une limitation correspondante est représentée par un débit maximum pour les liens radio établis .

7. Procédé selon la revendication 6, **caractérisé en ce que** ledit débit maximum est un débit maximum dans le sens montant.

8. Procédé selon la revendication 6, **caractérisé en ce que** ledit débit maximum est un débit maximum dans le sens descendant.

9. Procédé selon la revendication 6, **caractérisé en ce que** ledit débit maximum est un débit maximum pour un premier type de trafic, pour lequel un premier type de code correcteur d'erreurs est utilisé.

10. Procédé selon la revendication 6, **caractérisé en ce que** ledit débit maximum est un débit maximum pour un deuxième type de trafic, pour lequel un deuxième type de code correcteur d'erreurs est utilisé.

11. Procédé selon la revendication 9, **caractérisé en ce qu'**un premier type de code correcteur d'erreurs est un turbo-code.

12. Procédé selon la revendication 10, **caractérisé en ce qu'** un deuxième type de code correcteur d'erreurs est un code convolutionnel.

13. Procédé selon l'une des revendications 6 à 12, **caractérisé en ce que** ledit débit est un débit net.

14. Procédé selon l'une des revendications 1 à 13, **caractérisé en ce que** lesdites limitations sont considérées par cellule ou par station de base.

15. Procédé selon l'une des revendications 1 à 14, **caractérisé en ce que** lesdites limitations sont considérées par canal physique.

16. Procédé selon l'une des revendications 1 à 14, **caractérisé en ce que** lesdites limitations sont considérées par type de canal physique.

17. Procédé selon la revendication 16, **caractérisé en ce que** un type de canal physique est un canal physique dédié.

18. Procédé selon la revendication 16, **caractérisé en ce que** un type de canal physique est un canal physique commun.

19. Réseau de radiocommunications mobiles, **caractérisé en ce qu'**il comporte des moyens pour la mise en oeuvre d'un procédé selon l'une des revendications 1 à 18.

20. Station de base pour réseau de radiocommunications mobiles, **caractérisée en ce qu'**elle comporte des moyens pour la mise en oeuvre d'un procédé selon l'une des revendications 1 à 18.

21. Station de base selon la revendication 20, **caractérisée en ce que** lesdits moyens comportent des moyens pour signaler à un contrôleur de stations de base qui la contrôle une ou plusieurs limitations dans sa capacité de traitement, correspondant à un ou plusieurs paramètres représentatifs de la charge de trafic .

22. Contrôleur de stations de base pour réseau de radiocommunications mobiles, **caractérisé en ce qu'**il comporte des moyens pour la mise en oeuvre d'un procédé selon l'une des revendications 1 à 18.

23. Contrôleur de stations de base selon la revendication 22, **caractérisé en ce que** lesdits moyens comportent des moyens pour vérifier si une ou plusieurs des limitations dans la capacité de traitement d'une station de base qu'il contrôle, correspondant à un ou plusieurs paramètres représentatifs de la charge de trafic, sont atteintes.
